# EUROPÄISCHE PATENTSCHRIFT

(11) **EP 2 927 042 B1**
(45) Veröffentlichungstag und Bekanntmachung des Hinweises auf die Patenterteilung: **22.05.2019**
(21) Anmeldenummer: 15158647.6
(22) Anmeldetag: 11.03.2015
(51) Int. Cl.: B60K 35/00, B60K 37/06, G01D 7/00, G01P 15/08, G01C 21/36, G01P 1/07, G01P 1/08

(54) **VERFAHREN ZUM ANZEIGEN VON INFORMATIONEN IN EINEM FAHRZEUG**
METHOD FOR DISPLAYING INFORMATION IN A VEHICLE
PROCÉDÉ D'AFFICHAGE D'INFORMATIONS DANS UN VÉHICULE

(30) Priorität: 31.03.2014 DE 102014206049
(43) Veröffentlichungstag der Anmeldung: 07.10.2015
(73) Patentinhaber: Volkswagen Aktiengesellschaft, 38440 Wolfsburg (DE)
(72) Erfinder: Wild, Holger, 10179 Berlin (DE); Czelnik, Mark Peter, 38440 Wolfsburg (DE); Seitz, Gordon, 38468 Ehra-Lessien (DE)

(56) Entgegenhaltungen:
- EP-A1- 1 769 971
- WO-A1-2005/080140
- DE-A1-102008 027 087
- JP-A- 2003 095 029
- JP-A- 2010 002 263

## Beschreibung

Die vorliegende Erfindung betrifft ein Verfahren zum Anzeigen von Informationen in einem Fahrzeug, bei dem zumindest ein graphisches Objekt zum Anzeigen von Informationen mittels einer Anzeigevorrichtung dargestellt wird. Des Weiteren wird bei dem Verfahren die Beschleunigung des Fahrzeugs mittels eines Beschleunigungssensors erfasst.

In einem Fahrzeug, insbesondere in einem Kraftfahrzeug, werden elektronische Einrichtungen wie Navigations- und Fahrassistenzsysteme sowie Multimediaanwendungen verbaut, die von zahlreichen im Fahrzeug positionierten Sensoren unterstützt werden. Diese Vielzahl elektronischer Einrichtungen führt zu einer großen Informationsmenge, die für die Anzeige ausgewählt und auf einer Anzeigefläche möglichst anschaulich präsentiert werden soll.

Um die Anzeige von Betriebszuständen von Einrichtungen eines Fahrzeugs zu erleichtern, wurde in der WO 2012/110021 A2 vorgeschlagen, die Darstellung erfasster Betriebsparameter auf verschiedenen Anzeigeflächen durch automatisch geordnete Anzeigeelemente zu realisieren. Die Anzeigeelemente sind einem bedienbaren oder nicht bedienbaren Zustand zugeordnet, wobei im bedienbaren Zustand erweiterte Informationen anzeigt werden. Bei den Anzeigeelementen kann es sich insbesondere um bedienbare Funktionswidgets handeln, die Informationen zu einer aktiven Datei einer Multimediaeinrichtung, Uhrzeit- oder Wetterdaten oder gemessene Fahrzeugparameter anzeigen.

Aus der DE 10 2008 027 087 A1 ist ein Verfahren zum Bestimmen eines Neigungswinkels eines Fahrzeugs bekannt. Durch Messung der Beschleunigung eines Fahrzeugs werden Beschleunigungsmesswerte ermittelt und aus diesen aktuelle Nickwinkel und Neigewinkel des Fahrzeugs berechnet. Diese Winkel werden dann im Fahrzeug angezeigt.

Die WO 2005/080140 A1, welche den Oberbegriff des unabhängigen Anspruchs offenbart, beschreibt eine Anzeigevorrichtung für ein Fahrzeug, bei der ein Betriebszustand des Fahrzeugs erfasst und ein Bild angezeigt wird, wobei in Abhängigkeit von einer Beschleunigung des Fahrzeugs das Bild auf der Anzeigefläche verschoben oder rotiert dargestellt wird.

Der vorliegenden Erfindung liegt die Aufgabe zugrunde, ein Verfahren der eingangs genannten Art bereitzustellen, bei dem eine an das Fahrgeschehen angepasste Informationsanzeige in dem Fahrzeug bereitgestellt wird.

Erfindungsgemäß wird diese Aufgabe durch ein Verfahren mit den Merkmalen des Anspruchs 1 gelöst. Vorteilhafte Ausgestaltungen und Weiterbildungen ergeben sich aus den Merkmalen der abhängigen Ansprüche.

Bei dem erfindungsgemäßen Verfahren wird die Darstellung des graphischen Objekts in Abhängigkeit von dem Wert der erfassten Beschleunigung verändert. Bei dem erfindungsgemäßen Verfahren wird somit die Art der Darstellung eines graphischen Objekts mit dem Fahrgeschehen gekoppelt, und zwar mit der Beschleunigung des Fahrzeugs. In Abhängigkeit von dem Wert der Beschleunigung verändert sich die Darstellung des graphischen Objekts. Dabei verändert sich nicht notwendigerweise der von dem graphischen Objekt angezeigte Informationsinhalt. Dieser Informationsinhalt kann unverändert bleiben, wohingegen die Darstellung des graphischen Objekts selbst in Abhängigkeit von dem Wert der erfassten Beschleunigung verändert wird. Der Nutzer, insbesondere der Fahrer des Fahrzeugs, erhält auf diese Weise auch über die Art der Darstellung der graphischen Objekte eine Rückmeldung zum Fahrgeschehen.

Bei dem erfindungsgemäßen Verfahren wird das graphische Objekt bei der Veränderung der Darstellung dreidimensional perspektivisch um eine Achse geschwenkt dargestellt. Bei der Berechnung für die Darstellung des graphischen Objekts wird dabei ein körperliches Objekt betrachtet, welches um eine Achse geschwenkt wird. Von der Anzeigevorrichtung wird dann eine perspektivische Darstellung des dreidimensional geschwenkten körperlichen Objekts als graphisches Objekt angezeigt.

Gemäß einer anderen Ausgestaltung wird das graphische Objekt bei der Veränderung der Darstellung autostereoskopisch um eine Achse geschwenkt dargestellt. In diesem Fall sieht im Unterschied zur perspektivischen Darstellung das eine Auge des Betrachters ein geringfügig anderes Bild als das andere Auge, so dass eine reale dreidimensionale Darstellung erreicht wird. Bei einer autostereoskopischen Anzeige sind dabei keine speziellen Vorrichtungen, wie z. B. Brillen oder dergleichen, nötig, um den dreidimensionalen Effekt beim Betrachten der Anzeige hervorzurufen. Um dies zu erreichen wird eine Anzeigefläche der Anzeigevorrichtung z. B. mit einer Maske für die Trennung verschiedener Zwischenbilder versehen. Die Maske ist beispielsweise eine wellenlängenselektive Filtermaske. Dieser Filter gibt die Lichtausbreitungsrichtungen der einzelnen Subpixel des Displays durch Abdecken bzw. Filtern vor. Einzelne Farbwerte der Pixel werden in verschiedenen Winkeln in den Raum abgestrahlt. Auf diese Weise lassen sich für die beiden Augen des Betrachters separate Bilder erzeugen, die beim Betrachter zu einem dreidimensionalen Bild zusammengesetzt werden. Dabei zeigt das Bild für das eine Auge eine leicht versetzte Betrachtungsposition relativ zu dem Bild, das für das andere Auge bestimmt ist. Vorzugsweise sind mindestens acht autostereoskopische Ansichten gleichzeitig darstellbar, wobei die Ansichten in einen horizontalen Sichtfächer abstrahlbar sind. Es können vorzugsweise mehrere stereoskopische Sichtfächer nebeneinander erzeugt werden und eine Sichtzone bilden. Bevorzugt sind in dem Sichtfächer insgesamt sechs bis acht nebeneinander liegende autostereoskopische Ansichten enthalten. Der horizontale Öffnungswinkel des Sichtfächers oder der Sichtfächer, in dem/denen eine autostereoskopische Darstellung erfolgt, ist vorzugsweise größer 15° und insbesondere zwischen 25 und 30°. Besonders bevorzugt ist ein Öffnungswinkel von 27°. Auf diese Weise können für den Betrachter mehrere Ansichten bei verschiedenen Betrachtungswinkeln erzeugt werden, bei denen jeweils korrekt Bildpaare für die Zusammensetzung zu einem dreidimensionalen Bild bei den jeweiligen Winkeln abgestrahlt werden.

Die Ausrichtung der Schwenkachse hängt bei dem erfindungsgemäßen Verfahren insbesondere von der Richtung der erfassten Beschleunigung ab. Auf diese Weise wird vorteilhafterweise erreicht, dass unterschiedliche Beschleunigungsrichtungen des Fahrzeugs zu unterschiedlichen Schwenkachsen des graphischen Objekts führen. Die Schwenkbewegungen, welche von dem graphischen Objekt dargestellt werden, können auf diese Weise intuitiv von dem Nutzer mit der Beschleunigungsrichtung, welche er im Fahrzeug spürt, in Verbindung gebracht werden.

Gemäß einer Ausgestaltung des erfindungsgemäßen Verfahrens ist die Schwenkachse horizontal und in der Ebene einer Anzeigefläche der Anzeigevorrichtung ausgerichtet, wenn erfasst wurde, dass das Fahrzeug parallel zur Längsachse des Fahrzeugs positiv oder negativ beschleunigt wurde. Das graphische Objekt wird somit perspektivisch oder autostereoskopisch nach vorne oder nach hinten gekippt, wenn das Fahrzeug bei einer Geradeausfahrt beschleunigt oder abgebremst, d.h. negativ beschleunigt, wird. Die horizontal und in der Ebene der Anzeigefläche ausgerichtete Schwenkachse fällt in diesem Fall insbesondere mit einer unteren oder oberen Kante des graphischen Objekts zusammen. Diese Kante ist in diesem Fall somit horizontal ausgerichtet.

Wenn hingegen erfasst wurde, dass das Fahrzeug parallel zur Querachse des Fahrzeugs beschleunigt wurde, ist die Schwenkachse insbesondere senkrecht zu der Ebene der Anzeigefläche der Anzeigevorrichtung ausgerichtet. Bei einer Kurvenfahrt wird das graphische Objekt somit zu der einen oder zu der anderen Seite gekippt. Die senkrecht zu der Ebene der Anzeigefläche ausgerichtete Schwenkachse fällt insbesondere mit einer unteren Ecke des graphischen Objekts zusammen. Auch hierdurch kann der Nutzer eine Kurvenfahrt des Fahrzeugs sehr intuitiv in einem Zusammenhang mit der Darstellung der graphischen Objekte bringen.

Gemäß einer Weiterbildung des erfindungsgemäßen Verfahrens hängt die Größe und/oder die Richtung des Schwenkwinkels von der Größe und/oder der Richtung der erfassten Beschleunigung ab. Ein größerer Wert der Beschleunigung führt insbesondere zu einem größeren Schwenkwinkel. Ein kleinerer Wert der Beschleunigung führt hingegen zu einem kleineren Schwenkwinkel. Vorteilhafterweise wird hierdurch der Wert der Beschleunigung anhand des Schwenkwinkels des graphischen Objekts visualisiert. Gleichermaßen kann der Schwenkwinkel parallel zu der Richtung der Beschleunigung ausgerichtet sein. Dabei kann die Beschleunigungsrichtung nicht nur parallel zur Längsachse oder zur Querachse des Fahrzeugs sein, sondern auch schräg dazu, wenn zum Beispiel das Fahrzeug bei einer Kurvenfahrt die Geschwindigkeit verändert.

Bei dem erfindungsgemäßen Verfahren werden die dreidimensional perspektivisch oder autostereoskopisch dargestellten Schwenkbewegungen des graphischen Objekts so berechnet, dass die Schwenkbewegungen in eine Richtung ausgeführt werden, die entgegengesetzt zu der Richtung der erfassten Beschleunigung des Fahrzeugs ist. Bei einer Kurvenfahrt können die graphischen Objekte somit in die Kurve hineingeschwenkt werden. Sie führen dann dieselben Bewegungen aus, wie beispielsweise ein Radfahrer oder ein Motorradfahrer bei einer Kurvenfahrt. Die graphischen Objekte visualisieren damit eine sportliche Fahrweise.

Bei dem erfindungsgemäßen Verfahren werden die dreidimensional perspektivisch oder autostereoskopisch dargestellten Schwenkbewegungen des graphischen Objekts so berechnet, dass sie den Schwenkbewegungen eines körperlichen Objekts entsprechen, welches den erfassten Beschleunigungen des Fahrzeugs ausgesetzt ist. Dabei kann beispielsweise die Annahme getroffen werden, dass das körperliche Objekt an einem Punkt frei in allen Raumrichtungen schwenkbar gelagert ist. Für die Darstellung des graphischen Objekts wird dann die Bewegung dieses körperlichen Objekts unter den Bedingungen der erfassten Beschleunigung berechnet. Auf diese Weise wird eine sehr reale Bewegung der graphischen Objekte im Fahrzeug erreicht. Damit das graphische Objekt wieder in eine Ausgangslage zurückkehrt, wenn keine Beschleunigung mehr erfasst worden ist, wird bei der Berechnung z. B. zugrunde gelegt, dass die Schwenkbewegungen des körperlichen Objekts so gedämpft sind, dass das körperliche Objekt in eine Ausgangslage zurückkehrt, wenn keine Beschleunigung des Fahrzeugs erfasst wird. Alternativ kann auch eine Rückstellkraft in die Ausgangslage unterstellt werden.

Gemäß einer Weiterbildung des erfindungsgemäßen Verfahrens wird mittels der Anzeigevorrichtung eine Vielzahl graphischer Objekte dargestellt, deren Informationsinhalte vom Nutzer des Fahrzeugs konfigurierbar sind. Bei der Anzeige der Vielzahl der Objekte handelt es sich insbesondere um einen Startbildschirm, der auch als Homescreen bezeichnet wird, welcher unmittelbar nach dem Einschalten oder Starten des Fahrzeugs angezeigt wird. Ferner ist es möglich, dass der Nutzer zwischen einem Hauptmenü, welches vom Fahrzeughersteller bereitgestellt wird, und einem personalisierten Startbildschirm hin und her wechseln kann.

Gemäß einer Weiterbildung des erfindungsgemäßen Verfahrens sind zumindest einem Teil der graphischen Objekte Informationsquellen mit sich verändernden Inhalten zugeordnet. Von diesem Teil der graphische Objekte wird jeweils der aktuelle Inhalt der Informationsquelle angezeigt. Bei diesen graphischen Objekten kann es sich somit um sogenannte Widget-Objekte handeln. Unter einem Widget-Objekt wird im Sinne der Erfindung ein Objekt verstanden, welches graphisch von der Anzeigevorrichtung dargestellt wird und welches einer Anwendung zugeordnet ist, die zum Beispiel von einer Fahrzeugeinrichtung ausgeführt wird. Das Widget-Objekt zeigt insbesondere Informationen von einer Fahrzeugeinrichtung an, die laufend aktualisiert werden.

Gemäß einer weiteren Weiterbildung des erfindungsgemäßen Verfahrens ist das graphische Objekt als betätigbares Schaltelement ausgebildet, wobei vor einer Betätigung eine Vorschau eines Inhalts und/oder einer Funktion angezeigt wird, die nach der Betätigung des Schaltelements angezeigt oder ausgeführt wird. Auf diese Weise kann der Nutzer bereits vor dem Betätigen des Schaltelements des graphischen Objekts den danach angezeigten Inhalt oder die danach ausgeführte Funktion erkennen. Dies erleichtert die Bedienung der graphischen Objekte.

Unter einem *Schaltelement* wird im Sinne der Erfindung ein Steuerelement einer graphischen Benutzerschnittstelle in dem Bedienmodus verstanden. Ein Schaltelement unterscheidet sich von Elementen und Flächen zur reinen Informationsanzeige, so genannten Anzeigeelementen, darin, dass sie auswählbar sind und ein Hinweis auf die Funktion des Schaltelements anders als im Anzeigemodus angezeigt wird. Bei einer Auswahl eines Schaltelements wird eine ihr zugeordnete Funktion ausgeführt. Die Funktion kann nur zu einer Veränderung der Informationsanzeige führen. Ferner können über die Schaltelemente Einrichtungen gesteuert werden, deren Bedienung von der Informationsanzeige unterstützt wird. Die Schaltelemente können somit herkömmliche mechanische Schalter ersetzen. Die Schaltelemente können beliebig für eine frei programmierbaren Anzeigefläche erzeugt und von dieser angezeigt werden.

Die Erfindung wird nun anhand von Ausführungsbeispielen mit Bezug zu den Zeichnungen erläutert.
- Figur 1: zeigt schematisch den Aufbau eines Ausführungsbeispiels einer Vorrichtung zum Ausführen des erfindungsgemäßen Verfahrens und die Kopplung dieser Vorrichtung mit anderen Einrichtungen des Fahrzeugs,
- Figur 2: zeigt eine Anzeige auf der Anzeigefläche, wenn keine Beschleunigung des Fahrzeugs erfasst wurde,
- Figur 3: zeigt eine Anzeige auf der Anzeigefläche gemäß einem nicht erfindungsgemäßen Beispiel, wenn eine positive Beschleunigung des Fahrzeugs parallel zur Längsachse erfasst wurde,
- Figur 4: zeigt eine Anzeige auf der Anzeigefläche gemäß einem ersten Ausführungsbeispiel des erfindungsgemäßen Verfahrens, wenn eine negative Beschleunigung des Fahrzeugs parallel zur Längsachse erfasst wurde,
- Figur 5: zeigt eine Anzeige, die von dem nicht erfindungsgemäßen Beispiel bei einer Kurvenfahrt erzeugt wurde,
- Figur 6: zeigt schematisch eine Anzeige gemäß einem zweiten Ausführungsbeispiel des erfindungsgemäßen Verfahrens beim Befahren einer Rechtskurve und
- Figur 7: zeigt die Anzeige gemäß dem zweiten Ausführungsbeispiel des erfindungsgemäßen Verfahrens beim Befahren einer Linkskurve.

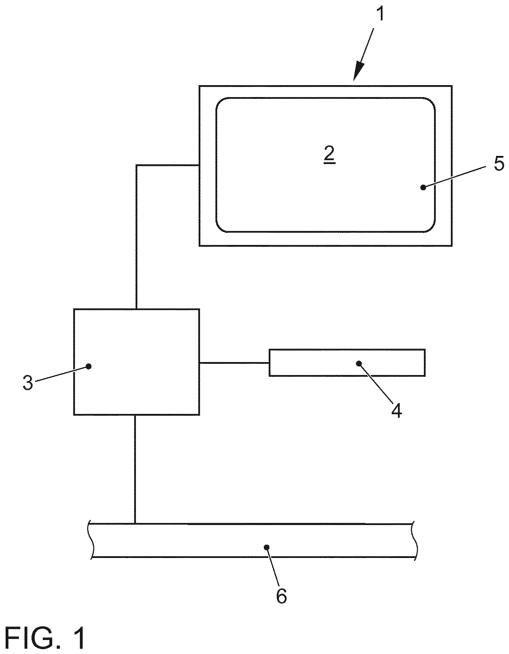

Im Folgenden wird mit Bezug zu Figur 1 eine Vorrichtung beschrieben, mittels welcher die später beschriebenen Ausführungsbeispiele des erfindungsgemäßen Verfahrens ausgeführt werden können:
Die schematisch in Fig. 1 gezeigte Vorrichtung umfasst eine Anzeigevorrichtung 1 mit einer Anzeigefläche 2, die so im Innenraum des Fahrzeugs angeordnet ist, dass sie von zumindest einem Fahrzeuginsassen, insbesondere dem Fahrer, gut sichtbar ist. Die Anzeigefläche 2 kann von einem Display, insbesondere einem Flüssigkristalldisplay, beliebiger Bauart bereitgestellt werden.

Auf der Anzeigefläche 2 ist eine berührungsempfindliche Oberfläche 5 vorgesehen, über welche der Nutzer Eingaben tätigen kann. Es wird somit ein sogenannter Touchscreen bereitgestellt.

Die Anzeigevorrichtung 1 ist mit einer Steuervorrichtung 3 gekoppelt. Mittels der Steuervorrichtung 3 können die Berührungen auf der berührungsempfindlichen Oberfläche 5 ortsaufgelöst erfasst und in Abhängigkeit von der Anzeige auf der Anzeigefläche 2 in Steuersignale umgesetzt werden. Ferner können von der Steuervorrichtung 3 Graphikdaten erzeugt werden, die mittels der Anzeigevorrichtung 1 angezeigt werden können.

Die Steuervorrichtung 3 ist mit einem Beschleunigungssensor 4 des Fahrzeugs gekoppelt. Der Beschleunigungssensor 4 kann beispielsweise in verschiedene Fahrerassistenzsysteme integriert sein. Er erfasst den Wert und die Richtung der Beschleunigung des Fahrzeugs. Es wird somit der Beschleunigungsvektor erfasst, welcher kontinuierlich an die Steuervorrichtung 3 übertragen wird.

Des Weiteren ist die Steuervorrichtung 3 mit einem Datenbus 6 des Fahrzeugs gekoppelt. Über diesen Datenbus 6 ist die Steuervorrichtung 3 mit einer Vielzahl von Fahrzeugeinrichtungen verbunden, zu denen Informationen auf der Anzeigefläche 2 angezeigt werden.

Optional kann vor der Anzeigefläche 2 ist eine Maske angeordnet sein, um eine autostereoskopische Anzeige zu ermöglichen. Bei der Maske handelt es sich insbesondere um eine wellenlängenselektive Filtermaske bzw. eine optische Strukturmaske. Die Maske ermöglicht es, zwischen Teilbildern, die zu verschiedenen Ansichten gehören, zu unterscheiden und jede Ansicht in eine andere Richtung abzustrahlen. Es können somit Teilbilder für das rechte und für das linke Auge eines Betrachters getrennt werden. Beim Betrachten der Anzeigevorrichtung können die Teilbilder zu einer dreidimensionalen Ansicht zusammengesetzt werden. Hierfür sind keine weiteren Hilfsmittel wie Brillen oder dergleichen erforderlich. Hinsichtlich weiterer Details einer solchen Anzeigevorrichtung wird auf die DE 103 09 194 A1 und die DE 103 20 530 A1 verwiesen.

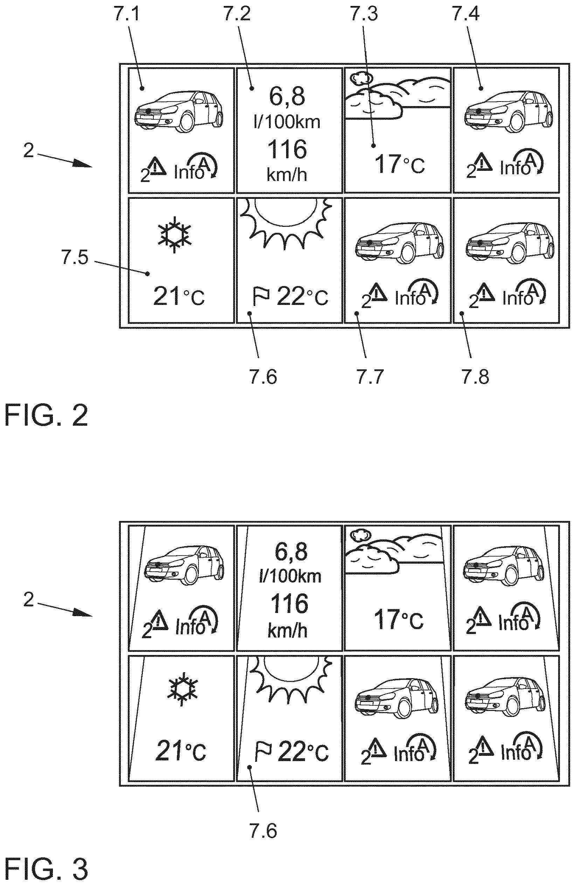

Die Trennung der Teilbilder für das dreidimensionale Bild ist nur in einem bestimmten Raumwinkel möglich. Bewegt der Betrachter sich beispielsweise in einer horizontalen Ebene zur Seite, wird die Trennung der Teilbilder aufgehoben und die Darstellung wird zweidimensional. Um möglichst viele Bildpaare für eine korrekte dreidimensionale Darstellung im Raum zu erzeugen, werden für ein Anzeigebild mehrere Ansichten dargestellt. Die Teilbilder dieser verschiedenen Ansichten werden in etwa fächerförmig horizontal abgestrahlt, so dass sich der horizontale Sichtfächer bildet. Der Öffnungswinkel eines Sichtfächers beträgt z. B. 27°. Es hat sich herausgestellt, dass acht Ansichten bei einer 4 Zoll großen Anzeigefläche 2 besonders bevorzugt sind. In diesem Fall sind die Helligkeit, Auflösung und die räumliche Wiedergabe ausreichend. Die Auflösung der Anzeigefläche 2 ist in diesem Fall größer 150 dpi. Im Folgenden wird ein erstes Ausführungsbeispiel des erfindungsgemäßen Verfahrens mit Bezug zu den Figuren 2 bis 5 erläutert:
Beim Starten des Fahrzeugs wird der in Figur 2 gezeigte Startbildschirm angezeigt. Er zeigt acht graphische Objekte 7.1 bis 7.8, die allgemein auch mit 7 bezeichnet werden. Bei den graphischen Objekten 7 handelt es sich zumindest zum Teil um Widget-Objekte, welche verschiedenen Fahrzeugeinrichtungen zugeordnet sind und deren Informationen aktualisiert angezeigt werden. Welche graphische Objekte 7 auf dem Startbildschirm angezeigt werden sollen, ist vom Nutzer frei konfigurierbar.

Die graphischen Objekte 7 werden als Kacheln in einem Raster angezeigt. Eine solche Kachel eines graphischen Objekts 7 ist als ein Schnellzugriff in einem Menü zu verstehen. Berührt der Nutzer zum Beispiel mit seiner Fingerspitze die Anzeigefläche 2 bei einem entsprechenden graphischen Objekt 7 wird das entsprechende Menü in einer Vollbildansicht angezeigt oder es wird eine dem graphischen Objekt 7 zugeordnete Funktion ausgeführt. Des Weiteren besteht die Möglichkeit, dass der Nutzer in jedem Zustand der Bedienstruktur durch einen Bedienvorgang zu dem Startbildschirm zurückgekehrt.

Bestimmte graphische Objekte 7 können eine feste Zuordnung zu einer Fahrzeugeinrichtung haben. Es kann jedoch auch graphische Objekte 7 geben, deren Zuordnung zu einer Fahrzeugeinrichtung frei wählbar ist. Der Nutzer kann ein solches graphisches Objekt zum Beispiel durch eine Berührung auswählen. Daraufhin wird ein Menü geöffnet, über welches der Nutzer die Zuordnung auswählen kann.

Außerdem ist es vorgesehen, dass der Nutzer die Zuordnung von graphischen Objekten 7 zu bestimmten Fahrzeugeinrichtungen verändert. Beispielsweise kann ein entsprechendes Editiermenü erscheinen, wenn der Nutzer ein graphisches Objekt 7 für ein bestimmtes Zeitintervall berührt.

Nachdem das Fahrzeug gestartet wurde und der in Figur 2 gezeigte Startbildschirm angezeigt wird, setzt sich das Fahrzeug in Bewegung. Nun wird der Wert der Beschleunigung sowie die Richtung der Beschleunigung fortwährend von dem Beschleunigungssensor 4 erfasst und an die Steuervorrichtung 3 übertragen. Die Darstellung der graphischen Objekte 7 wird nun in Abhängigkeit von dem Wert und/oder der Richtung der erfassten Beschleunigung verändert.

In Figur 3 ist die Situation gezeigt, bei der das Fahrzeug bei einer Geradeausfahrt positiv beschleunigt wird. In diesem Fall wird das graphische Objekt 7.6 in einer perspektivischen Darstellung nach hinten um die untere Kante des graphischen Objekts 7.6 geschwenkt bzw. gekippt dargestellt. Der angezeigte Inhalt des graphischen Objekts 7.6 bleibt dabei gleich. Der Inhalt kann allerdings auch perspektivisch geschwenkt dargestellt werden. Der Schwenkwinkel richtet sich nach der Größe der Beschleunigung. Je größer die Beschleunigung ist, je größer ist der Schwenkwinkel.

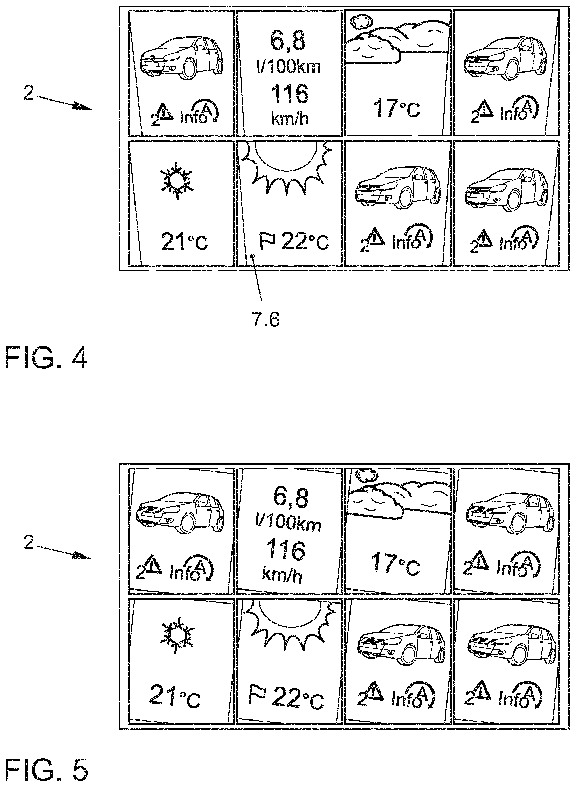

In Figur 4 ist die Situation gezeigt, bei der umgekehrt bei einer Geradeausfahrt eine Verzögerung des Fahrzeugs, das heißt eine negative Beschleunigung, parallel zur Längsachse des Fahrzeugs von dem Beschleunigungssensor 4 erfasst worden ist. Das graphische Objekt 7.6 wird erfindungsgemäß um die obere Kante perspektivisch nach hinten geschwenkt bzw. gekippt. Auch in diesem Fall hängt der Schwenkwinkel von der Größe der negativen Beschleunigung ab. Je größer der Betrag der Beschleunigung ist, desto weiter wird das graphische Objekt 7.6 perspektivisch nach vorne geschwenkt bzw. gekippt.

In Figur 5 ist die Situation bei einer Kurvenfahrt des Fahrzeugs gezeigt. Es wirkt dann eine Beschleunigung, die parallel zur Querachse des Fahrzeugs ausgerichtet ist. In diesem Fall wird das graphische Objekt 7.6 um eine Achse geschwenkt, gekippt bzw. gedreht, die senkrecht zur Ebene der Anzeigefläche 2 ausgerichtet ist. Bei dem in Figur 5 gezeigten Beispiel verläuft diese Achse durch die Mitte des graphischen Objekts 7.6. Die Größe des Schwenkwinkels bzw. des Dreh- oder Kippwinkels richtet sich auch in diesem Fall nach der Größe der erfassten Querbeschleunigung. Je größer die Querbeschleunigung ist, desto weiter wird das graphische Objekt 7.6 geschwenkt bzw. gekippt oder gedreht. Bei dem in Figur 5 gezeigten Beispiel wird das graphische Objekt 7.6 im Uhrzeigersinn geschwenkt. Diese Schwenkrichtung wird beim Befahren einer Rechtskurve angezeigt. Beim Befahren einer Linkskurve wird das graphische Objekt 7.6 entgegen dem Uhrzeigersinn geschwenkt.

Bei den vorstehend beschriebenen Darstellungen des graphischen Objekts 7.6 in den Figuren 3 bis 5 können auch die anderen graphischen Objekte 7 in analoger Weise geschwenkt dargestellt werden.

Ferner ist es möglich, statt einer perspektivischen Darstellung der graphischen Objekte 7 eine autostereoskopische Darstellung mittels der Anzeigevorrichtung 1 bereitzustellen, falls die Anzeigevorrichtung 1 entsprechend ausgebildet ist.

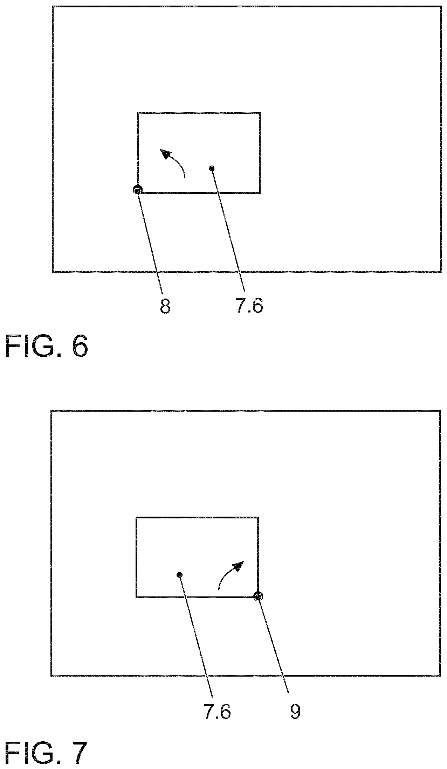

Mit Bezug zu den Figuren 6 und 7 wird ein zweites Ausführungsbeispiel des erfindungsgemäßen Verfahrens erläutert:
Das zweite Ausführungsbeispiel entspricht im Wesentlichen dem vorstehend beschriebenen ersten Ausführungsbeispiel des erfindungsgemäßen Verfahrens.

Die Berechnung des Schwenkwinkels bzw. die Berechnung der Schwenkrichtung wird dabei wie folgt vorgenommen: Es wird angenommen, es handle sich zum Beispiel bei dem graphischen Objekt 7.6 um ein körperliches Objekt, welches zum Beispiel eine rechteckige Platte mit einer bestimmten Masse ist. Es wird nun berechnet, wie sich dieses körperliche Objekt verhält, wenn die von dem Beschleunigungssensor 4 erfassten Beschleunigungen auf dieses körperliche Objekt wirken.

Bei einer Beschleunigung parallel zur Längsachse des Fahrzeugs wird als Schwenkachse wie beim ersten Ausführungsbeispiel die untere oder obere Kante des körperlichen Objekts gewählt. Ferner wird angenommen, dass eine Rückstellkraft in den unverschwenkten Ausgangszustand des körperlichen Objekts wirkt. Wenn das Fahrzeug nun positiv beschleunigt wird, würde das körperliche Objekt in Richtung des Betrachters geschwenkt bzw. gekippt werden. Dies wird dann perspektivisch auf der Anzeigefläche 2 dargestellt. Wenn das Fahrzeug umgekehrt abgebremst wird, würde das körperliche Objekt vom Betrachter weg nach hinten geschwenkt bzw. gekippt werden. Wird eine solche Beschleunigung erfasst, wird dies perspektivisch auf der Anzeigefläche 2 dargestellt.

Bei einer Beschleunigung parallel zur Querrichtung des Fahrzeugs, zum Beispiel bei einer Kurvenfahrt, wird angenommen, dass das körperliche Objekt um eine Achse geschwenkt wird, die senkrecht auf der Anzeigefläche 2 steht. Diese Achse befindet sich beispielsweise bei einer Rechtskurve bei der linken Ecke 8 des graphischen Objekts 7.6. Bei einer Linkskurve, befindet sich die Achse hingegen bei der rechten Ecke 9 des graphischen Objekts 7.6. Wie in Figur 6 gezeigt wird das graphische Objekt 7.6 in diesem Fall bei einer Rechtskurve entgegen dem Uhrzeigersinn geschwenkt und, wie in Figur 7 gezeigt, bei einer Linkskurve im Uhrzeigersinn. Gemäß einer anderen Ausgestaltung kann die Achse auch für eine Rechtskurve und eine Linkskurve identisch bei einer Position außerhalb des Schwerpunkts des körperlichen Objekts gewählt werden, welches dem graphischen Objekt 7.6 entspricht.

Wenn keine Beschleunigungen wirken, kehrt das körperliche Objekt und entsprechend das graphische Objekt 7.6 jeweils in die unverschwenkte Ausgangslage zurück.

### Bezugszeichenliste

- 1: Anzeigevorrichtung
- 2: Anzeigefläche
- 3: Steuervorrichtung
- 4: Beschleunigungssensor
- 5: berührungsempfindliche Oberfläche
- 6: Datenbus
- 7, 7.1 bis 7.8: graphische Objekte
- 8: Schwenkachse
- 9: Schwenkachse

## Patentansprüche

1. Verfahren zum Anzeigen von Informationen in einem Fahrzeug, bei dem
zumindest ein graphisches Objekt (7) zum Anzeigen von Information mittels einer Anzeigevorrichtung (1) dargestellt wird und
die Beschleunigung des Fahrzeugs mittels eines Beschleunigungssensors (4) erfasst wird, wobei
die Darstellung des graphischen Objekts (7) in Abhängigkeit von dem Wert der erfassten Beschleunigung verändert wird und
das graphische Objekt (7) bei der Veränderung der Darstellung dreidimensional perspektivisch oder autostereoskopisch um eine Achse geschwenkt dargestellt wird, **dadurch gekennzeichnet,**
**dass** die dreidimensional perspektivisch oder autostereoskopisch dargestellten Schwenkbewegungen des graphischen Objekts (7) so berechnet werden, dass sie den Schwenkbewegungen eines körperlichen Objekts entsprechen, welches den erfassten Beschleunigungen des Fahrzeugs ausgesetzt ist.

2. Verfahren nach Anspruch 1,
**dadurch gekennzeichnet,**
**dass** die Ausrichtung der Schwenkachse von der Richtung der erfassten Beschleunigung abhängt.

3. Verfahren nach Anspruch 1 oder 2,
**dadurch gekennzeichnet,**
**dass** die Schwenkachse horizontal und in der Ebene einer Anzeigefläche (2) der Anzeigevorrichtung (1) ausgerichtet ist, wenn erfasst wurde, dass das Fahrzeug parallel zur Längsachse des Fahrzeugs positiv oder negativ beschleunigt wurde.

4. Verfahren nach Anspruch 3,
**dadurch gekennzeichnet,**
**dass** die horizontal und in der Ebene der Anzeigefläche (2) ausgerichtete Schwenkachse mit einer unteren oder oberen Kante des graphischen Objekts (7) zusammenfällt.

5. Verfahren nach einem der Ansprüche 1 oder 2,
**dadurch gekennzeichnet,**
**dass** die Schwenkachse senkrecht zu der Ebene der Anzeigefläche (2) der Anzeigevorrichtung (1) ausgerichtet ist, wenn erfasst wurde, dass das Fahrzeug parallel zur
Querachse des Fahrzeugs beschleunigt wurde.

6. Verfahren nach Anspruch 5,
**dadurch gekennzeichnet,**
**dass** die senkrecht zu der Ebene der Anzeigefläche (2) ausgerichtete Schwenkachse mit einer unteren Ecke des graphischen Objekts (7) zusammenfällt.

7. Verfahren nach einem der Ansprüche 1 bis 6,
**dadurch gekennzeichnet,**
**dass** die Größe und/oder die Richtung des Schwenkwinkels entsprechend den Schwenkbewegungen eines körperlichen Objekts von der Größe und/oder der Richtung der erfassten Beschleunigung abhängt.

8. Verfahren nach einem der Ansprüche 1 bis 7,
**dadurch gekennzeichnet,**
**dass** die dreidimensional perspektivisch oder autostereoskopisch dargestellten Schwenkbewegungen des graphischen Objekts (7) so berechnet werden, dass die Schwenkbewegungen in eine Richtung ausgeführt werden, die entgegengesetzt zu der Richtung der erfassten Beschleunigung des Fahrzeugs ist.

9. Verfahren nach einem der vorhergehenden Ansprüche,
**dadurch gekennzeichnet,**
**dass** die bei der Berechnung zugrunde gelegten Schwenkbewegungen des körperlichen Objekts so gedämpft sind, dass das körperliche Objekt in eine Ausgangslage zurückkehrt, wenn keine Beschleunigung des Fahrzeugs erfasst wird.

10. Verfahren nach einem der vorhergehenden Ansprüche,
**dadurch gekennzeichnet,**
**dass** mittels der Anzeigevorrichtung (1) eine Vielzahl graphischer Objekte (7) dargestellt wird, deren Informationsinhalte vom Nutzer des Fahrzeugs konfigurierbar sind.

11. Verfahren nach einem der vorhergehenden Ansprüche ,
**dadurch gekennzeichnet,**
**dass** zumindest einem Teil der graphischen Objekte (7) Informationsquellen mit sich verändernden Inhalten zugeordnet sind und dass von diesem Teil der graphische Objekte (7) jeweils der aktuelle Inhalt der Informationsquelle angezeigt wird.

12. Verfahren nach einem der vorhergehenden Ansprüche,
**dadurch gekennzeichnet,**
**dass** das graphische Objekt (7) als betätigbares Schaltelement ausgebildet ist, wobei vor einer Betätigung eine Vorschau eines Inhalts und/oder einer Funktion angezeigt wird, die nach der Betätigung des Schaltelements angezeigt oder ausgeführt wird.

## Claims

1. A method for displaying information in a vehicle, in which at least one graphic object (7) for displaying information is represented by means of a display device (1) and the acceleration of the vehicle is detected by means of an acceleration sensor (4), wherein the representation of the graphic object (7) is changed depending on the value of the detected acceleration and when the representation is changed the graphic object (7) is represented in a three-dimensional perspective or auto-stereoscopically pivoted about an axis,
**characterized in**
**that** the pivot movements of the graphic objects (7) represented in a three-dimensional perspective or auto-stereoscopically are calculated so that they correspond to the pivot movements of a physical object, which is subject to the detected accelerations of the vehicle.

2. A method according to Claim 1,
**characterized in**
**that** the alignment of the pivot axis depends on the direction of the detected acceleration.

3. A method according to Claim 1 or 2,
**characterized in**
**that** the pivot axis is aligned horizontally and in the plane of a display surface (2) of the display device (1), if it was detected that the vehicle was positively or negatively accelerated parallel to the longitudinal axis of the vehicle.

4. A method according to Claim 3,
**characterized in**
**that** the pivot axis aligned horizontally and in the plane of the display surface (2) coincides with a lower or upper edge of the graphic object (7).

5. A method according to any one of Claims 1 or 2,
**characterized in**
**that** the pivot axis is aligned perpendicular to the plane of the display surface (2) of the display device (1), if it was detected, that the vehicle was accelerated parallel to the transverse axis of the vehicle.

6. A method according to Claim 5,
**characterized in**
**that** the pivot axis aligned perpendicular to the plane of the display surface (2) coincides with a lower corner of the graphic object (7).

7. A method according to any one of Claims 1 to 6,
**characterized in**
**that** the size and/or the direction of the pivot angle corresponding to the pivot movements of a physical object depends on the size and/or the direction of the detected acceleration.

8. A method according to any one of Claims 1 to 7,
**characterized in**
**that** the pivot movements of the graphic object (7) represented in a three-dimensional perspective or auto-stereoscopically are calculated so that the pivot movements are carried out in a direction, which is opposite to the direction of the detected acceleration of the vehicle.

9. A method according to any one of the preceding claims,
**characterized in**
**that** the pivot movements of the physical object used in the calculation are attenuated so that the physical object reverts to an initial position, if no acceleration of the vehicle is detected.

10. A method according to any one of the preceding claims,
**characterized in**
**that** by means of the display device (1) a plurality of graphic objects (7) is represented, the informational content of which can be configured by the user of the vehicle.

11. A method according to any one of the preceding claims,
**characterized in**
**that** informational sources with changing content are associated with at least one portion of the graphic objects (7) and that of said portion of the graphic objects (7) in each case the current content of the informational source is displayed.

12. A method according to any one of the preceding claims,
**characterized in**
**that** the graphic object (7) is designed as an actuatable switching element, wherein before an actuation a preview of a content and/or a function is displayed, which is displayed or carried out after the actuation of the switching element.

## Revendications

1. Procédé d'affichage d'infirmations dans un véhicule, dans lequel
au moins un objet graphique (7) est représenté pour l'affichage d'informations au moyen d'un dispositif d'affichage (1) et
l'accélération du véhicule est détectée au moyen d'un capteur d'accélération (4),
la représentation de l'objet graphique (7) étant modifiée en fonction de la valeur de l'accélération détectée et
l'objet graphique (7) étant représenté, lors de la modification de la représentation, en perspective de manière tridimensionnelle ou de manière auto-stéréoscopique, pivoté autour d'un axe,
**caractérisé en ce que**
les mouvements de pivotement, représentés en perspective de manière tridimensionnelle ou de manière auto-stéréoscopique, de l'objet graphique (7) sont calculés de façon à ce qu'ils correspondent aux mouvements de pivotement d'un objet corporel soumis aux accélérations détectées du véhicule.

2. Procédé selon la revendication 1,
**caractérisé en ce que**
l'orientation de l'axe de pivotement dépend de la direction de l'accélération détectée.

3. Procédé selon la revendication 1 ou 2,
**caractérisé en ce que**
l'axe de pivotement est orienté horizontalement et dans le plan d'une surface d'affichage (2) du dispositif d'affichage (1), lorsqu'il a été détecté que le véhicule a été accéléré de manière positive ou négative parallèlement à l'axe longitudinal du véhicule.

4. Procédé selon la revendication 3,
**caractérisé en ce que**
l'axe de pivotement orienté horizontalement et dans le plan de la surface d'affichage (2) coïncide avec un bord inférieur ou supérieur de l'objet graphique (7).

5. Procédé selon l'une des revendications 1 ou 2,
**caractérisé en ce que**
l'axe de pivotement est orienté perpendiculairement au plan de la surface d'affichage (2) du dispositif d'affichage (1) lorsqu'il a été détecté que le véhicule a été accéléré parallèlement à l'axe transversal du véhicule.

6. Procédé selon la revendication 5,
**caractérisé en ce que**
l'axe de pivotement orienté perpendiculairement au plan de la surface d'affichage (2) coïncide avec un coin inférieur de l'objet graphique (7).

7. Procédé selon l'une des revendications 1 à 6,
**caractérisé en ce que**
la taille et/ou la direction de l'angle de pivotement correspondant aux mouvements de pivotement d'un objet corporel dépend de la taille et/ou de la direction de l'accélération détectée.

8. Procédé selon l'une des revendications 1 à 7,
**caractérisé en ce que**
les mouvements de pivotement, représentés en perspective de manière tridimensionnelle ou de manière auto-stéréoscopique, de l'objet graphique (7) sont calculés de façon à ce qu'ils soient exécutés dans une direction qui est opposée à la direction de l'accélération détectée du véhicule.

9. Procédé selon l'une des revendications précédentes,
**caractérisé en ce que**
les mouvements de pivotement de l'objet corporel pris en compte lors du calcul sont amortis de façon à ce que l'objet corporel revienne à une position initiale lorsqu'aucune accélération du véhicule n'est détectée.

10. Procédé selon l'une des revendications précédentes,
**caractérisé en ce que**
au moyen du dispositif d'affichage (1), sont représentés une pluralité d'objets graphiques (7) dont les contenus d'informations peuvent être configurés par l'utilisateur du véhicule.

11. Procédé selon l'une des revendications précédentes,
**caractérisé en ce que**
à au moins une partie des objets graphiques (7), correspondent des sources d'informations avec des contenus variables, et le contenu actuel de la source d'informations est affiché par cette partie des objets graphiques (7).

12. Procédé selon l'une des revendications précédentes,
**caractérisé en ce que**
l'objet graphique (7) est conçu comme un élément de commutation actionnable, moyennant quoi, avant un actionnement, est affichée une prévisualisation d'un contenu et/ou d'une fonction qui est affichée ou exécutée après l'actionnement de l'élément de commutation.
